# EUROPEAN PATENT APPLICATION

(11) **EP 4 424 877 A2**
(43) Date of publication of application: **04.09.2024**
(21) Application number: 24153625.9
(22) Date of filing: 24.01.2024
(51) Int. Cl.: C25B 1/23, C25B 3/26, C25B 5/00, C25B 15/08

(54) **SYNTHETIC FUEL MANUFACTURING SYSTEM**

(30) Priority: 02.03.2023 JP 2023032188
(71) Applicant: Toshiba Energy Systems & Solutions Corporation, Saiwai-ku Kawasaki-shi Kanagawa (JP)
(72) Inventor: OTA, Hiroyuki, Minato-ku, Tokyo (JP)
(74) Representative: Hoffmann Eitle

(57) **Abstract**

A synthetic fuel manufacturing system according to an embodiment includes: a carbon dioxide electrolysis unit that discharges cathode gas containing carbon monoxide gas and hydrogen gas; a booster that increases a pressure of the cathode gas; a synthetic fuel generation unit that generates a synthetic fuel by means of the cathode gas having the increased pressure; and a combustion section. The combustion section combusts anode gas containing carbon dioxide gas and oxygen gas, and off gas containing hydrocarbon gas, to generate highly concentrated gas having an increased concentration of the carbon dioxide gas. The carbon dioxide electrolysis unit electrolyzes the carbon dioxide gas contained in the highly concentrated gas discharged from the combustion section.

## Description

### FIELD

An embodiment of the present invention relates to a synthetic fuel manufacturing system.

### BACKGROUND

In recent years, efforts have been made to achieve carbon neutrality. For example, a system that electrolyzes carbon dioxide gas to convert it into carbon monoxide gas, and synthesizes carbon monoxide gas and hydrogen gas to generate a synthetic fuel mainly containing hydrocarbons by the FT (Fisher-Tropsch) synthesis process is under development. The FT synthesis process generates a synthetic fuel mainly containing hydrocarbons from synthesis gas synthesized from carbon monoxide gas and hydrogen gas by means of catalyst. The thus generated synthetic fuel can be used for various fuels such as sustainable aviation fuel (SAF) or for FT products such as LPG gas, naphtha, diesel oil, etc.

### BRIEF DESCRIPTION OF THE DRAWINGS

Fig. 1 is a view showing a synthetic fuel manufacturing system according to a first embodiment.
Fig. 2 is a schematic cross-sectional view showing an electrolysis cell of a carbon dioxide electrolysis unit shown in Fig. 1.
Fig. 3 is a schematic view showing a carbon dioxide separation and recovery unit shown in Fig. 1.
Fig. 4 is a view showing a modification example of Fig. 1.
Fig. 5 is a view showing another modification example of Fig. 1.
Fig. 6 is a view showing a synthetic fuel manufacturing system according to a second embodiment.

### DETAILED DESCRIPTION

A synthetic fuel manufacturing system according to an embodiment comprises: a carbon dioxide electrolysis unit that electrolyzes carbon dioxide gas and discharges cathode gas containing carbon monoxide gas and hydrogen gas; a booster that increases a pressure of the cathode gas discharged from the carbon dioxide electrolysis unit; a synthetic fuel generation unit that generates a synthetic fuel mainly containing hydrocarbons by means of the cathode gas having the increased pressure; and a combustion section. The combustion section combusts anode gas containing carbon dioxide gas and oxygen gas discharged from the carbon dioxide electrolysis unit, and tail gas containing hydrocarbon gas discharged from the synthetic fuel generation unit, to generate highly concentrated gas having an increased concentration of the carbon dioxide gas. The carbon dioxide electrolysis unit electrolyzes the carbon dioxide gas contained in the highly concentrated gas discharged from the combustion section.

A synthetic fuel manufacturing system according to embodiments of the present invention is described below with reference to the drawings.

### (First Embodiment)

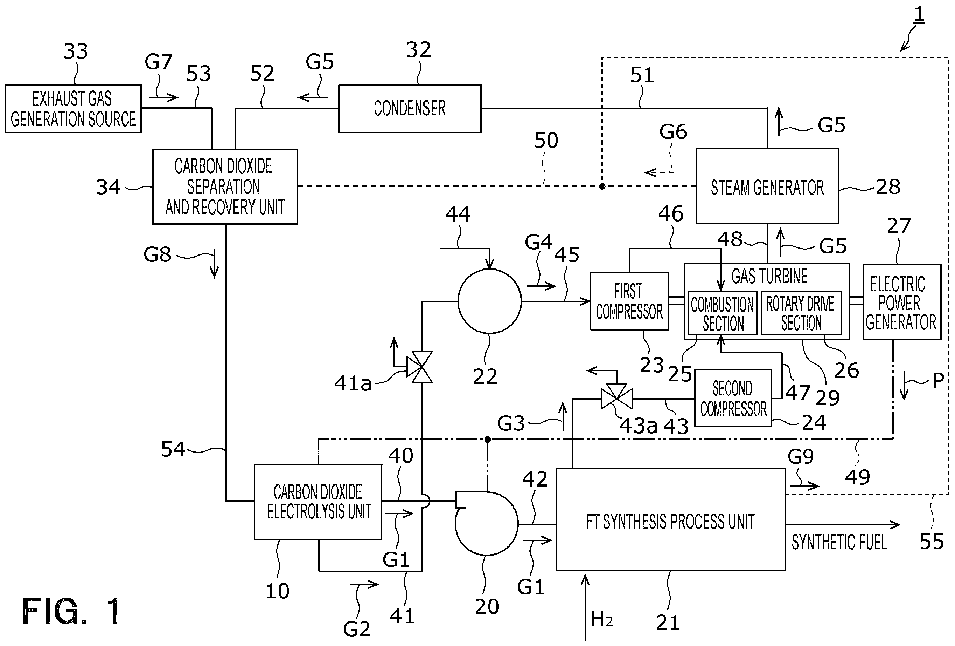

A synthetic fuel manufacturing system 1 according to a first embodiment is described by means of Figs. 1 to 5. The synthetic fuel manufacturing system 1 is a system for manufacturing a synthetic fuel mainly containing hydrocarbons by means of, as a raw material, carbon monoxide gas obtained by electrolyzing carbon dioxide gas.

As shown in Fig. 1, the synthetic fuel manufacturing system 1 according to this embodiment comprises a carbon dioxide electrolysis unit 10, a booster 20, an FT synthesis process unit 21, a mixer 22, a first compressor 23, a second compressor 24, a combustion section 25, a rotary drive section 26, an electric power generator 27, a steam generator 28, a condenser 32, an exhaust gas generation source 33, and a carbon dioxide separation and recovery unit 34.

The carbon dioxide electrolysis unit 10 electrolyzes carbon dioxide gas. The carbon dioxide electrolysis unit 10 according to this embodiment is configured to react directly carbon dioxide gas. It is thus unnecessary to dissolve the carbon dioxide gas in an aqueous solution. As described below, the carbon dioxide gas is discharged from the carbon dioxide separation and recovery unit 34, and is supplied to the carbon dioxide electrolysis unit 10.

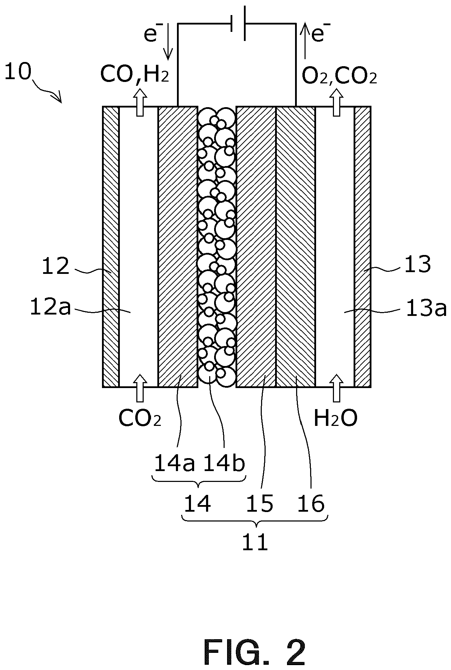

As shown in Fig. 2, the carbon dioxide electrolysis unit 10 includes an electrolysis cell 11, a cathode separator 12, and an anode separator 13. The cathode separator 12 includes a flow path 12a for carbon dioxide gas, and the anode separator 13 includes a flow path 13a for electrolyte. The carbon dioxide electrolysis unit 10 has a stack structure in which the electrolysis cell 11, the cathode separator 12, and the anode separator 13 are stacked one on another. The electrolysis cell 11 includes a cathode electrode 14 having a gas diffusion layer 14a and a catalyst layer 14b, a solid polymer membrane 15, and an anode electrode 16.

A first carbon dioxide gas line 54 described later is connected to the flow path 12a of the cathode separator 12 to supply carbon dioxide gas G8 to the cathode electrode 14. The anode electrode 16 is supplied with electrolyte.

When voltage is applied between the cathode electrode 14 and the anode electrode 16, a reduction reaction of carbon dioxide gas, which is as shown in an equation (1) below, occurs in the cathode electrode 14.

2CO₂+H₂O+2e⁻ → CO+2OH⁻ ··· (1)

An oxidation reduction of hydroxide ions, which is as shown in an equation (2) below, occurs in the anode electrode 16, to thereby generate oxygen gas and water.

2OH⁻→1/2O₂+H₂O+2e⁻ ··· (2)

In order to directly react the carbon dioxide gas in the cathode electrode 14, a three-phase interface may be formed in the catalyst layer 14b. In the three-phase interface, carbon dioxide gas (gas), water (liquid), and catalyst (solid) collect in a balanced manner. However, if they are out of balance, an amount of hydrogen gas, which is a side reaction and is generated as shown in an equation (3) below, may increase. For example, when a supply rate of the carbon dioxide gas to the catalyst layer 14b of the cathode electrode 14 decreases, an amount of hydrogen gas generated in the cathode electrode 14 may increase. The increase in generation amount of hydrogen gas may decrease conversion efficiency of carbon dioxide gas to carbon monoxide gas.

2H₂O+2e⁻ → H₂+2OH⁻ ··· (3)

According to the above equations (1) to (3), the carbon dioxide electrolysis unit 10 discharges cathode gas G1 containing carbon monoxide gas and hydrogen gas from the cathode electrode 14. A first cathode line 40 described later is connected to the flow path 12a of the cathode separator 12. The carbon dioxide electrolysis unit 10 discharges anode gas G2 containing oxygen gas and unreacted carbon dioxide gas from the anode electrode 16. An anode line 41 described later is connected to the flow path 13a of the anode separator 13.

As shown in Fig. 1, the carbon dioxide electrolysis unit 10 is connected to the booster 20 through the first cathode line 40. The first cathode line 40 supplies the cathode gas G1 to the booster 20. The carbon dioxide electrolysis unit 10 is connected to the mixer 22 described later through the anode line 41. The anode line 41 supplies the anode gas G2 to the mixer 22. The anode line 41 may be provided with a release valve 41a. The release valve 41a is configured to release the anode gas G2 from the anode line 41 to the atmosphere.

As shown in Fig. 1, the booster 20 increases a pressure of the cathode gas G1 discharged from the carbon dioxide electrolysis unit 10. The booster 20 according to this embodiment increases the pressure of the cathode gas G1 by means of electric power P generated by the electric power generator 27 (generated electric power P) described later. The FT synthesis process unit 21 described later performs a reduction reaction of carbon monoxide gas, with the cathode gas G1 having the increased pressure. To this end, the booster 20 increases the pressure of the cathode gas G1 to be supplied to the FT synthesis process unit 21.

The booster 20 is connected to the FT synthesis process unit 21 through the second cathode line 42. The second cathode line 42 supplies the cathode gas G1 having the increased pressure to the FT synthesis process unit 21.

The FT synthesis process unit 21 generates a synthetic fuel mainly containing hydrocarbons by means of the cathode gas G1 whose pressure has been increased by the booster 20. The FT synthesis process unit 21 is an example of a synthetic fuel generation unit, and performs a catalytic reduction reaction of carbon monoxide gas supplied from the booster 20.

For example, the FT synthesis process unit 21 may synthesize a jet fuel mainly containing hydrocarbons with the carbon numbers between 12 and 15. A jet fuel is generally manufactured by refining crude oil. The FT synthesis process unit 21 according to this embodiment performs a process of chain bonding carbon monoxides to generate hydrocarbons with the carbon numbers between 12 and 15. This process may use the Fischer-Tropsch process (FT synthesis) that synthesizes a liquid fuel through a reduction reaction between carbon monoxide gas and hydrogen gas in the presence of a catalyst. The hydrogen gas may be supplied from a hydrogen-gas supply facility, not shown. FT synthesis at a temperature of 200°C to 400°C at a pressure of 1 MPa to 4 MPa generates hydrocarbons with a wide molecular weight distribution. By performing of a hydrogenation process and an isomerization process followed by distillation, hydrocarbon components suitable for a jet fuel can be extracted (continuous product process). At this stage, almost the same composition as that of crude oil-derived jet fuel can be obtained. Thereafter, a jet fuel that can be used as the aforementioned sustainable aviation fuel (SAF) can be obtained through addition of various additives. By processing hydrocarbon components not suitable for SAF similarly to the above, LPG, naphtha, diesel oil, etc. are obtained, which can be used as synthetic liquid fuels for automobiles, ships, etc.

The FT synthesis process unit 21 is connected to a tail gas line 43. The tail gas line 43 discharges, as a byproduct, a tail gas G3 containing hydrocarbon gas with the low carbon number. The hydrocarbons with the low carbon number may be hydrocarbons containing carbons the number of which is lower than that of the aforementioned hydrocarbons as a main component. The hydrocarbons with the low carbon number may include methane gas. In the below description, the hydrocarbon gas with the low carbon number is substituted for methane gas for the sake of convenience. However, the hydrocarbon gas with the low carbon number is not limited to methane gas. The tail gas G3 may include hydrogen gas and carbon dioxide gas. The tail gas G3 is sometimes referred to as FT off gas. The tail gas line 43 may be provided with a release valve 43a. The release valve 43a is configured to release the tail gas G3 from the tail gas line 43 to the atmosphere.

The mixer 22 mixes the anode gas G2 containing carbon dioxide gas and oxygen gas, which is discharged from the carbon dioxide electrolysis unit 10, and outside air described later. Mixed gas G4 which is a mixture of the anode gas G2 and the outside air is discharged from the mixer 22. The mixer 22 may have any configuration as long as it can mix the anode gas G2 and the outside air.

The mixer 22 may be configured to take in outside air, and to mix the outside air taken therein with the anode gas G2. Since the outside air contains oxygen gas, a concentration of the oxygen gas contained in the mixed gas G4 can be increased. This can prevent lack of oxygen gas, which might be caused by combustion of the mixed gas G4, and can suppress decrease in generation efficiency of carbon dioxide gas in the combustion section 25. For example, as shown in Fig. 1, an outside air intake line 44 including an outside air inlet may be connected to the mixer 22. An openable and closable intake valve, not shown, may be provided on the outside air intake line 44.

The mixer 22 is connected to the first compressor 23 through a mixed gas line 45. The mixed gas line 45 supplies the mixed gas G4 to the first compressor 23.

The first compressor 23 is configured to compress the mixed gas G4. The first compressor 23 may compress the mixed gas G4 by a rotary drive force obtained by the rotary drive section 26 described later. A turbine rotor described later may be connected to the first compressor 23. The mixed gas G4 compressed by the first compressor 23 is supplied to the combustion section 25 through a first compressor line 46.

The second compressor 24 is configured to compress the tail gas G3. The second compressor 24 is supplied with the tail gas G3 discharged from the FT synthesis process unit 21 through the tail gas line 43. The second compressor 24 may compress the tail gas G3 by any drive force. The tail gas G3 compressed by the second compressor 24 is supplied to the combustion section 25 through a second compressor line 47.

The combustion section 25 and the rotary drive section 26 according to this embodiment may constitute a gas turbine 29. The combustion section 25 may be formed as a combustion section of the gas turbine 29. The rotary drive section 26 obtains a rotary drive force by means of the highly concentrated gas G5 generated by the combustion section 25. The rotary drive section 26 may be formed as a turbine section of the gas turbine 29, and may include a turbine rotor. The electric power generator 27 is connected to the turbine rotor of the rotary drive section 26, and generates electric power with the rotary drive force obtained by the rotary drive section 26.

The combustion section 25 combusts the anode gas G2 discharged from the carbon dioxide electrolysis unit 10 and the tail gas discharged from the FT synthesis process unit 21. In this embodiment, the compressed mixed gas G4 is supplied from the first compressor line 46 to the combustion section 25. In addition, the compressed tail gas G3 is supplied from the second compressor line 47 to the combustion section 25. Then, the combustion section 25 mixes and combusts the mixed gas G4 and the tail gas G3. More specifically, methane gas contained in the tail gas G3 serves as a fuel for combustion, and carbon dioxide gas is generated from the methane gas, as shown in an equation (4) below.

CH₄+2O₂ → CO₂+2H₂O ··· (4)

In this manner, the highly concentrated gas G5 having the increased carbon dioxide gas concentration is generated from the mixed gas G4 and the tail gas G3 which have been supplied to the combustion section 25, and is discharged from the combustion section 25. The combustion of the methane gas increases a temperature of the highly concentrated gas G5.

The rotary drive section 26 is configured to drive the turbine rotor in rotation by the highly concentrated gas G5 discharged from the combustion section 25. The highly concentrated gas G5 performs expansion work in the rotary drive section 26, so that the turbine rotor is driven in rotation. The highly concentrated gas G5 having performed the expansion work is discharged from the rotary drive section 26.

As shown in Fig. 1, the rotary drive section 26 is connected to the steam generator 28 through a first highly concentrated gas line 48. The first highly concentrated gas line 48 supplies the highly concentrated gas G5 discharged from the rotary drive section 26 to the steam generator 28.

The electric power generator 27 is an example of an electric power generation unit, and generates electric power with a rotary drive force obtained by means of the highly concentrated gas G5 generated by the combustion section 25. The electric power generator 27 generates electric power with a rotary drive force generated by the rotary drive section 26. The electric power generator 27 is connected to the turbine rotor. When the turbine rotor is driven in rotation, the electric power generator 27 generates electric power to provide electric power P (generated electric power P). In this embodiment, the electric power P generated by the electric power generator 27 is supplied to the carbon dioxide electrolysis unit 10 and the booster 20 through an electric power line 49. The electric power line 49 may be branched in the middle and connected to the carbon dioxide electrolysis unit 10 and the booster 20. However, a plurality of the electric power lines 49 may be used, each of which is connected in parallel to the carbon dioxide electrolysis unit 10 and the booster 20. The carbon dioxide electrolysis unit 10 electrolyzes carbon dioxide gas by means of the generated electric power P. The booster 20 increases a pressure of the cathode gas G1 by means of the generated electric power P.

As shown in Fig. 1, the steam generator 28 generates steam G6 by means of, as a heating source, the highly concentrated gas G5 generated by the combustion section 25. Water may be supplied from a water supply facility, not shown, to the steam generator 28, and the steam G6 may be generated by heat exchange between the water and the highly concentrated gas G5. For example, the steam generator 28 may be formed as a boiler. The generated steam G6 may be supplied to the carbon dioxide separation and recovery unit 34 through a first steam line 50 to be used for recovery of carbon dioxide gas.

A second steam line 55 may be connected to the aforementioned FT synthesis process unit 21. The second steam line 55 supplies steam G9, which is generated from cooling water by reaction heat generated when the FT synthesis process unit 21 generates a synthetic fuel, to the first steam line 50. The steam G9 may be supplied, together with the steam G6 generated by the steam generator 28, to the carbon dioxide separation and recovery unit 34.

The steam generator 28 is connected to the condenser 32 through a second highly concentrated gas line 51. The second highly concentrated gas line 51 supplies the highly concentrated gas G5 discharged from the steam generator 28 to the condenser 32.

The condenser 32 is an example of a moisture removal unit. The condenser 32 removes moisture from the highly concentrated gas G5 discharged from the steam generator 28. The condenser 32 may remove moisture from the highly concentrated gas G5 by cooling the highly concentrated gas G5 to condense moisture contained in the highly concentrated gas G5.

The condenser 32 is connected to the carbon dioxide separation and recovery unit 34 through a third highly concentrated gas line 52. The third highly concentrated gas line 52 supplies the highly concentrated gas G5 discharged from the condenser 32 to the carbon dioxide separation and recovery unit 34.

The exhaust gas generation source 33 is an example of a carbon dioxide gas generation source. The exhaust gas generation source 33 may be a combustion facility that generates carbon dioxide gas in any plant. Examples of such a plant include a thermal power plant, a steel plant, a waste incineration plant, etc.

The exhaust gas generation source 33 generates carbon dioxide gas and discharges exhaust gas G7 containing the carbon dioxide gas. The exhaust gas generation source 33 is connected to the carbon dioxide separation and recovery unit 34 through an exhaust gas line 53. The exhaust gas line 53 supplies the exhaust gas G7 discharged from the exhaust gas generation source 33 to the carbon dioxide separation and recovery unit 34. The exhaust gas line 53 may be merged with the aforementioned third highly concentrated gas line 52.

The carbon dioxide separation and recovery unit 34 separates and recovers the carbon dioxide gas G8 from the highly concentrated gas G5 discharged from the combustion section 25, and separates and recovers the carbon dioxide gas G8 from the exhaust gas G7 discharged from the exhaust gas generation source 33. For example, the carbon dioxide separation and recovery unit 34 may recover the carbon dioxide gas G8 by means of an absorption solution AL such as amine solution. The carbon dioxide separation and recovery unit 34 may separate and recover the carbon dioxide gas G8 from the highly concentrated gas G5 and the exhaust gas G7, by means of the steam G6 generated by the steam generator 28. The carbon dioxide gas G8 recovered by the carbon dioxide separation and recovery unit 34 has a concentration of carbon dioxide gas that is higher than a concentration of carbon dioxide gas contained in the highly concentrated gas G5. In addition, the carbon dioxide gas G8 has a concentration of carbon dioxide gas that is higher than a concentration of carbon dioxide gas contained in the exhaust gas G7.

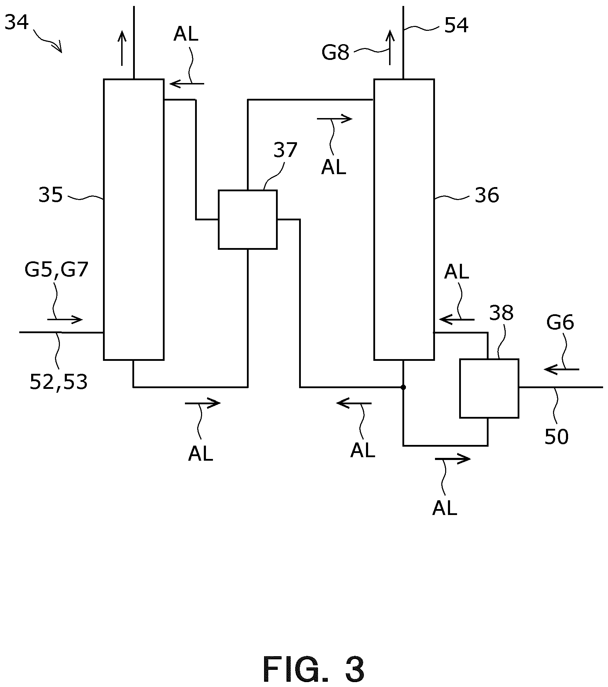

More specifically, as shown in Fig. 3, the carbon dioxide separation and recovery unit 34 includes an absorption tower 35 and a regeneration tower 36. The third highly concentrated gas line 52 and the exhaust gas line 53 are connected to the absorption tower 35, so that the highly concentrated gas G5 discharged from the steam generator 28 and the exhaust gas G7 are supplied thereto. In the absorption tower 35, the carbon dioxide gas contained in the highly concentrated gas G5 and the exhaust gas G7 is absorbed in the absorption liquid AL. The highly concentrated gas G5 and the exhaust gas G7 from which the carbon dioxide gas has been removed may be discharged from the absorption tower 35. The absorption liquid (rich liquid) AL having absorbed the carbon dioxide gas is supplied to the regeneration tower 36 and is heated. Thus, the carbon dioxide gas G8 is released from the absorption liquid AL in the regeneration tower 36, and the released carbon dioxide gas G8 is discharged from the regeneration tower 36 to the first carbon dioxide gas line 54. In this manner, the carbon dioxide gas G8 can be separated and recovered from the highly concentrated gas G5 and the exhaust gas G7.

The absorption liquid (lean liquid) AL from which the carbon dioxide gas G8 has been released in the regeneration tower 36 is discharged from the regeneration tower 36 and is supplied to the absorption tower 35. In the absorption tower 35, the absorption liquid absorbs carbon dioxide gas from the highly concentrated gas G5 supplied from the third highly concentrated gas line 52 and the exhaust gas G7 supplied from the exhaust gas line 53. In this manner, the absorption liquid AL circulates in the carbon dioxide separation and recovery unit 34, while repeating absorption and release of the carbon dioxide gas. The absorption liquid AL from the absorption tower 35 toward the regeneration tower 36 and the absorption liquid AL from the regeneration tower 36 toward the absorption tower 35 exchange heat in a heat exchanger 37.

Some of the absorption liquid AL discharged from the regeneration tower 36 is supplied to a reboiler 38. The first steam line 50 is connected to the reboiler 38, so that the steam G6 is supplied thereto from the steam generator 28. Thus, the reboiler 38 can heat the absorption liquid AL by means of the steam G6 as a heating source. The heated absorption liquid AL is supplied to the regeneration tower 36, and the absorption liquid AL in the regeneration tower 36 is heated. The heating source of the absorption liquid AL in the reboiler 38 is optional, and is not limited to the steam G6 supplied from the steam generator 28.

As shown in Fig. 1, the carbon dioxide separation and recovery unit 34 is connected to the carbon dioxide electrolysis unit 10 through the first carbon dioxide gas line 54. The first carbon dioxide gas line 54 is connected to the aforementioned regeneration tower 36. The first carbon dioxide gas line 54 supplies the carbon dioxide gas G8 discharged from the carbon dioxide separation and recovery unit 34 to the carbon dioxide electrolysis unit 10. The carbon dioxide electrolysis unit 10 electrolyzes the carbon dioxide gas G8 recovered by the carbon dioxide separation and recovery unit 34.

As shown in Fig. 1, the aforementioned carbon dioxide electrolysis unit 10 is supplied with the carbon dioxide gas contained in the highly concentrated gas G5 generated by the combustion section 25, and the carbon dioxide gas contained in the exhaust gas G7 generated by the exhaust gas generation source 33. In this embodiment, the highly concentrated gas G5 generated by the combustion section 25 is supplied to the carbon dioxide separation and recovery unit 34 through the rotary drive section 26 constituting the gas turbine 29, the steam generator 28, and the condenser 32. Then, the carbon dioxide separation and recovery unit 34 recovers the carbon dioxide gas G8 from the highly concentrated gas G5 and the exhaust gas G7. The carbon dioxide gas G8 is supplied to the carbon dioxide electrolysis unit 1, and is electrolyzed by it.

Next, a method of manufacturing a synthetic fuel by using the synthetic fuel manufacturing system 1 according to this embodiment as structured above is described.

The carbon dioxide gas G8 discharged from the hydrogen dioxide separation and recovery unit 34 is supplied to the hydrogen dioxide electrolysis unit 10. The carbon dioxide gas G8 is supplied to the cathode electrode 14 (see Fig. 2) of the carbon dioxide electrolysis unit 10. The anode electrode 16 is supplied with electrolyte.

When voltage is applied between the cathode electrode 14 and the anode electrode 16 in the carbon dioxide electrolysis unit 10, the carbon dioxide gas in the carbon dioxide gas G8 is electrolyzed. The carbon dioxide electrolysis unit 10 applies the voltage between the cathode electrode 14 and the anode electrode 16 by means of the electric power P generated by the electric power generator 27.

During this process, the cathode electrode 14 reduces the carbon dioxide gas to generate carbon monoxide gas. The generated carbon monoxide gas is discharged from the cathode electrode 14. The cathode gas G1 is supplied to the booster 20 through the first cathode line 40. The anode electrode 16 oxidizes hydroxide ions to generate oxygen gas. The generated oxygen gas is discharged, together with unreacted carbon dioxide gas, as the anode gas G2 from the anode electrode 16. The anode gas G2 is supplied to the mixer 22 through the anode line 41.

The booster 20 increases a pressure of the cathode gas G1. The booster 20 increases the pressure of the cathode gas G1 by means of the electric power P generated by the electric power generator 27. The cathode gas G1 having the increased pressure is supplied to the FT synthesis process unit 21 through the second cathode line 42.

The FT synthesis process unit 21 performs, under pressure, a catalytic reduction reaction of the carbon monoxide gas contained in the cathode gas G1 to generate a synthetic fuel mainly containing hydrocarbons. The generated synthetic fuel is discharged from the FT synthesis process unit 21. During the catalytic reduction reaction, the tail gas G3 containing methane gas is discharged from the FT synthesis process unit 21 to the tail gas line 43.

The mixer 22 mixes the anode gas G2 discharged from the carbon dioxide electrolysis unit 10 and outside air taken from the outside air intake line 44. The mixed gas is supplied as the mixed gas G4 to the first compressor 23 through the mixed gas line 45. The first compressor 23 compresses the mixed gas G4 and supplies it to the combustion section 25 through the first compressor line 46.

On the other hand, the tail gas G3 discharged to the tail gas line 43 is supplied to the second compressor 24. The second compressor 24 compresses the tail gas G3 and supplies it to the combustion section 25 through the second compressor line 47.

The combustion section 25 combusts the compressed mixed gas G4 and the compressed tail gas G3. More specifically, methane gas contained in the tail gas G3 serves as a fuel for combustion. This generates carbon dioxide gas from the methane gas, so that the high-temperature highly concentrated gas G5 having an increased carbon dioxide concentration is generated from the mixed gas G4 and the tail gas G3.

The high-temperature highly concentrated gas G5 is supplied to the rotary drive section 26 to drive the turbine rotor in rotation. The electric power generator 27 generates electric power by the rotary drive of the turbine rotor, and the generated electric power P is supplied to the carbon dioxide electrolysis unit 10 and the booster 20 through the electric power line 49. The highly concentrated gas G5 is supplied to the steam generator 28 through the first highly concentrated gas line 48.

In the steam generator 28, the high-temperature highly concentrated gas G5 heats water to generate steam. The highly concentrated gas G5 is supplied to the condenser 32 through the second highly concentrated gas line 51, so that moisture is removed from the highly concentrated gas G5. The highly concentrated gas G5 is supplied to the carbon dioxide separation and recovery unit 34 through the third highly concentrated gas line 52, so that the carbon dioxide gas G8 is recovered from the highly concentrated gas G5. In addition, the exhaust gas G7 discharged from the exhaust gas generation source 33 is supplied to the carbon dioxide separation and recovery unit 34 through the exhaust gas line 53, so that the carbon dioxide gas G8 is recovered from the exhaust gas G7. The steam G6 generated by the steam generator 28 is supplied to the reboiler 38 (see Fig. 3) of the carbon dioxide separation and recovery unit 34 through the first steam line 50, and is used for separation of the carbon dioxide gas G8. The recovered carbon dioxide gas G8 is supplied to the carbon dioxide electrolysis unit 10 through the first carbon dioxide gas line 54.

In this manner, the synthetic fuel manufacturing system 1, which can recycle carbon while manufacturing a synthetic fuel, works.

According to this embodiment, the carbon dioxide electrolysis unit 10 electrolyzes the carbon dioxide gas to generate the cathode gas G1 containing carbon monoxide gas. The booster 20 increases a pressure of the cathode gas G1, and the FT synthesis process unit 21 generates a synthetic fuel mainly containing hydrocarbons. The FT synthesis process unit 21 discharges the tail gas G3 containing methane gas, and the combustion section 25 combusts the tail gas G3 together with the anode gas G2 containing carbon dioxide gas discharged from the carbon dioxide electrolysis unit 10. Thus, carbon dioxide gas is generated from the methane gas, so that the highly concentrated gas G5 having an increased carbon dioxide gas concentration is generated. The carbon dioxide gas G8 contained in the highly concentrated gas G5 is recovered by the carbon dioxide separation and recovery unit 34 and is supplied to the carbon dioxide electrolysis unit 10. Thus, carbon rich gas such as carbon dioxide gas can be prevented from being released into the atmosphere from the synthetic fuel manufacturing system 1. This can improve a carbon recycling rate.

In addition, according to this embodiment, the electric power generator 27 generates electric power by a rotary drive force obtained by means of the highly concentrated gas G5 generated by the combustion section 25. The carbon dioxide electrolysis unit 10 electrolyzes carbon dioxide gas by means of the electric power P generated by the electric power generator 27. This makes it unnecessary to use external power for electrolyzing carbon dioxide gas, which can improve an energy recycling rate.

In addition, according to this embodiment, the electric power generator 27 generates electric power by a rotary drive force obtained by means of the highly concentrated gas G5 generated by the combustion section 25. The booster 20 electrolyzes the carbon dioxide gas by means of the electric power P generated by the electric power generator 27. This makes it unnecessary to use external power for increasing a pressure of the cathode gas G1, which can improve an energy recycling rate.

In addition, according to this embodiment, the carbon dioxide separation and recovery unit 34 separates and recovers the carbon dioxide gas G8 from the highly concentrated gas G5 discharged from the combustion section 25. The recovered carbon dioxide gas G8 is electrolyzed by the carbon dioxide electrolysis unit 10. This can increase a concentration of the carbon dioxide gas G8 supplied to the carbon dioxide electrolysis unit 10. In other words, even when a concentration of carbon dioxide gas in the highly concentrated gas G5 is low, the carbon dioxide gas can be recovered by the carbon dioxide separation and recovery unit 34, and the recovered carbon dioxide gas can be supplied to the carbon dioxide electrolysis unit 10. This can improve carbon monoxide gas generation efficiency in the carbon dioxide electrolysis unit 10, and can improve manufacturing efficiency of a synthetic fuel mainly containing hydrocarbons in the FT synthesis process unit 21.

In addition, according to this embodiment, the steam generator 28 generates the steam G6 by means of, as a heating source, the highly concentrated gas G5 generated by the combustion section 25, and the carbon dioxide gas G8 is separated and recovered from the highly concentrated gas G5 by means of the steam G6 generated by the steam generator 28. This allows the steam G6 to be generated by means of energy of the highly concentrated gas G5 discharged from the combustion section 25, and to be used for separation of the carbon dioxide gas G8 from the highly concentrated gas G5. This makes it unnecessary to supply the steam G6 for use in the separation of the carbon dioxide gas G8 from an external facility, which can improve an energy recycling rate.

In addition, according to this embodiment, the condenser 32 removes moisture from the highly concentrated gas G5 discharged from the combustion section 25. This can reduce the amount of moisture contained in the highly concentrated gas G5. In addition, the condenser 32 can cool the highly concentrated gas G5 to decrease a temperature of the highly concentrated gas G5.

In addition, according to this embodiment, the combustion section 25 and the rotary drive section 26 constitute the gas turbine 29. Thus, the highly concentrated gas G5 can be generated and the electric power P can be generated by means of the gas turbine 29 and the electric power generator 27. The obtained electric power P can be used by the carbon dioxide electrolysis unit 10 and the booster 20, which can improve an energy recycling rate.

In addition, according to this embodiment, the exhaust gas G7 containing carbon dioxide gas generated by the exhaust gas generation source 33 is supplied to the carbon dioxide separation and recovery unit 34, and the carbon dioxide gas G8 is recovered. The carbon dioxide gas G8 is electrolyzed by the carbon dioxide electrolysis unit 10 to generate carbon monoxide gas. This can increase an amount of carbon monoxide gas supplied to the FT synthesis process unit 21, while preventing carbon rich gas such as carbon dioxide gas from releasing into the atmosphere. This can increase an amount of synthetic fuel to be manufactured.

In the aforementioned embodiment, an example in which the steam G6 generated by the steam generator 28 is supplied to the carbon dioxide separation and recovery unit 34 to be used for separation of carbon dioxide gas was described. However, this embodiment is not limited to this example. For example, steam used for separation of carbon dioxide gas may be supplied from an external facility. In this case, the synthetic fuel manufacturing system 1 may not comprise the steam generator 28.

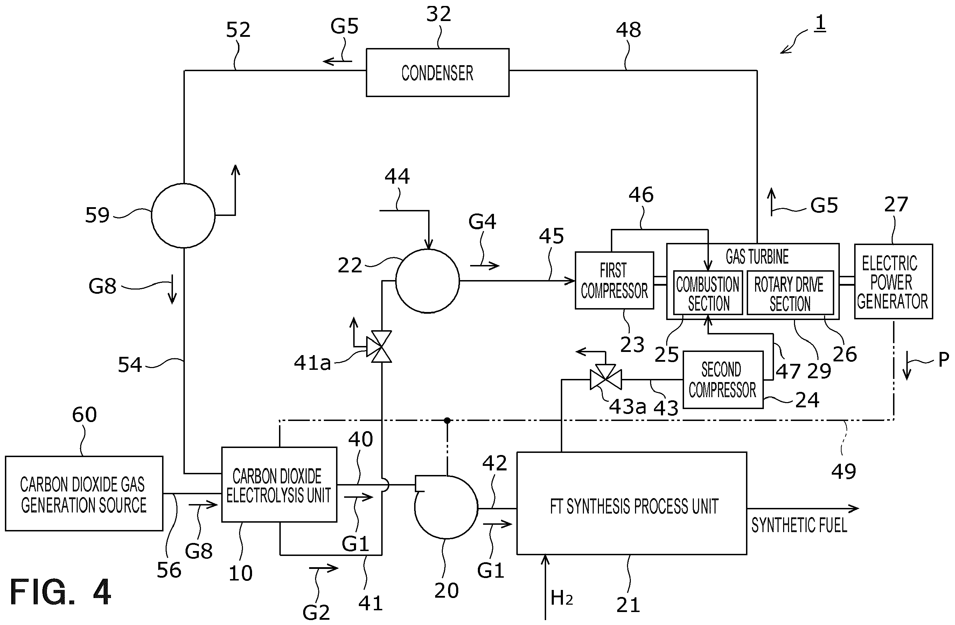

In addition, in the aforementioned embodiment, an example in which the synthetic fuel manufacturing system 1 comprises the steam generator 28 and the carbon dioxide separation and recovery unit 34 was described. However, this embodiment is not limited to this example. For example, as shown in Fig. 4, the synthetic fuel manufacturing system 1 may not comprise the steam generator 28 and the carbon dioxide separation and recovery unit 34.

More specifically, when a concentration of carbon dioxide gas contained in the highly concentrated gas G5 is high, the synthetic fuel manufacturing system 1 may not comprise the carbon dioxide separation and recovery unit 34. In this case, the synthetic fuel manufacturing system 1 may not comprise the steam generator 28 for generating the steam G6 used for recovery of carbon dioxide gas in the carbon dioxide separation and recovery unit 34. The synthetic fuel manufacturing system 1 may comprise a carbon dioxide refining unit 59 instead of the carbon dioxide separation and recovery unit 34.

The first highly concentrated gas line 48 according to an example of Fig. 4 supplies the highly concentrated gas G5 discharged from the rotary drive section 26 to the condenser 32. The condenser 32 removes moisture from the highly concentrated gas G5 discharged from the rotary drive section 26.

The highly concentrated gas G5 discharged from the condenser 32 is supplied to the carbon dioxide refining unit 59 through the third highly concentrated gas line 52. The carbon dioxide refining unit59 removes impurities contained in the highly concentrated gas G5. For example, oxygen gas, nitrogen gas, etc. contained in the highly concentrated gas G5 are removed, and they may be released as an off gas of the carbon dioxide refining unit 59 to the atmosphere. The carbon dioxide refining unit 59 may be configured to remove impurities by means of, for example, pressure swing absorption (PSA). The highly concentrated gas G5 becomes the carbon dioxide gas G8 by the removal of impurities. The carbon dioxide gas G8 discharged from the carbon dioxide refining unit 59 has a concentration of carbon dioxide gas that is higher than a concentration of carbon dioxide gas contained in the highly concentrated gas G5.

The highly concentrated gas G5 discharged from the caron dioxide refining unit 59 is supplied to the carbon dioxide electrolysis unit 10 through the first carbon dioxide gas line 54. The carbon dioxide electrolysis unit 10 electrolyzes the carbon dioxide gas G8 from which the impurities have been removed by the carbon dioxide refining unit 59.

In the example shown in Fig. 4, a carbon dioxide gas generation source 60 supplies the carbon dioxide gas G8 to the carbon dioxide electrolysis unit 10. The carbon dioxide gas generation source 60 may have any configuration as long as it can generate highly pure carbon dioxide gas G8. For example, the carbon dioxide gas generation source 60 may include a tank or a cylinder storing liquid carbon dioxide. The carbon dioxide gas generation source 60 may vaporize the liquid carbon dioxide to generate the carbon dioxide gas G8. The carbon dioxide gas generation source 60 is connected to the carbon dioxide electrolysis unit 10 through the second caron dioxide gas line 56. The second carbon dioxide gas line 56 supplies the carbon dioxide gas G8 discharged from the carbon dioxide gas generation source 60 to the carbon dioxide electrolysis unit 10. The second carbon dioxide gas line 56 may be merged with the aforementioned first carbon dioxide gas line 54.

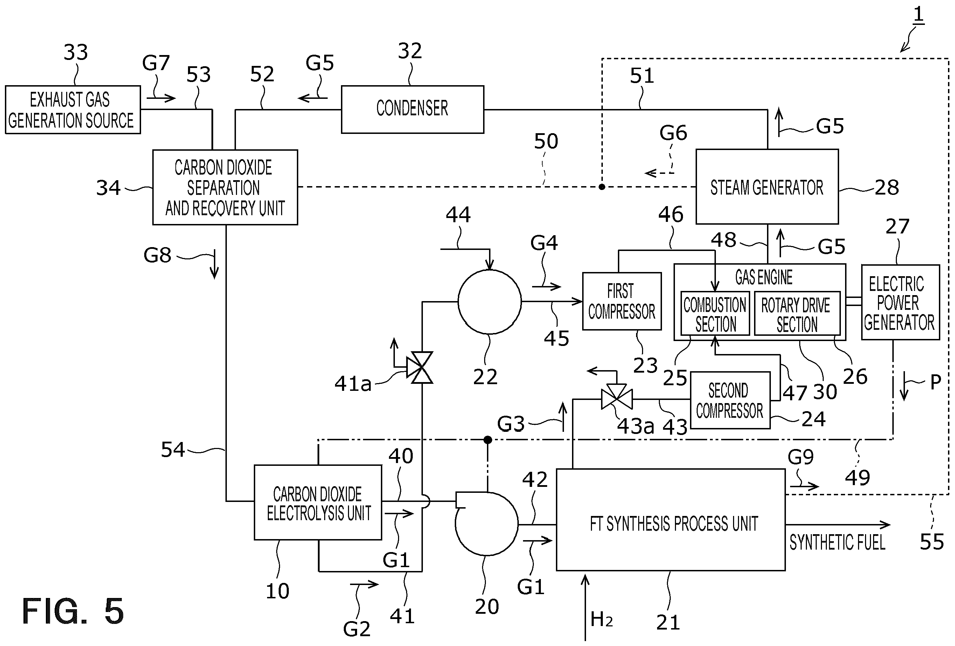

In addition, in the aforementioned embodiment, an example in which the combustion section 25 and the rotary drive section 26 constitute the gas turbine 29 was described. However, this embodiment is not limited to this example. For example, as shown in Fig. 5, the combustion section 25 and the rotary drive section 26 may constitute a gas engine 30. In this case, the combustion section 25 may be formed as a combustion chamber of the gas engine 30. The rotary drive section 26 may be formed as a drive section of the gas engine 30, and may include a crank shaft (not shown). The electric power generator 27 may be connected to the crank shaft of the rotary drive section 26, and may generate electric power by a rotary drive force obtained by the rotary drive section 26. Also in the example shown in Fig. 5, the highly concentrated gas G5 can be generated and the electric power P can be generated by means of the gas engine 30 and the electric power generator 27. The obtained electric power P can be used by the carbon dioxide electrolysis unit 10 and the booster 20, which can improve an energy recycling rate.

### (Second Embodiment)

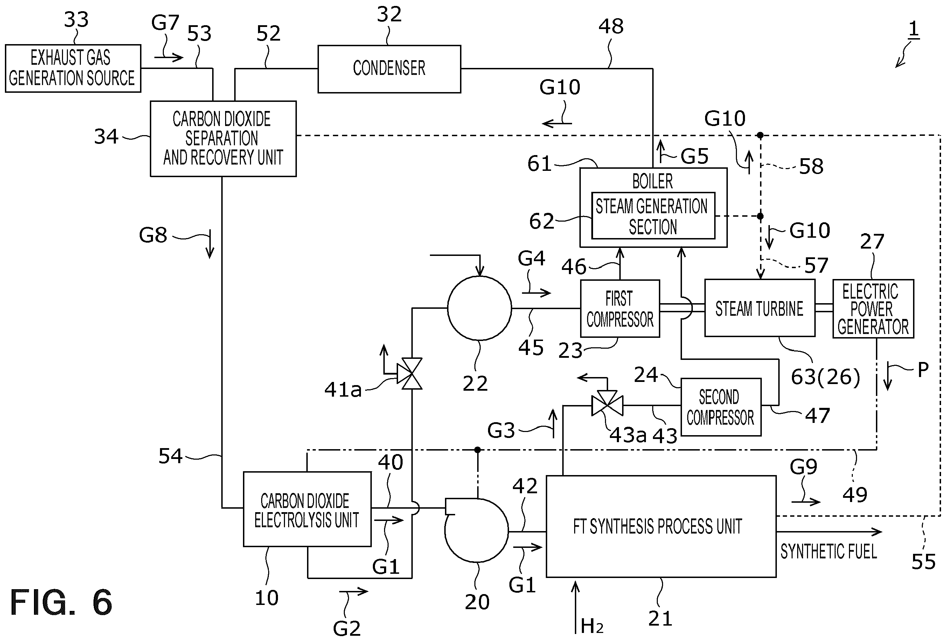

Next, a synthetic fuel manufacturing system according to a second embodiment is described by means of Fig. 6.

The second embodiment shown in Fig. 6 differs from the first embodiment shown in Figs. 1 to 5 mainly in that a combustion section includes a steam generation section that generates steam by means of generated highly concentrated gas as a heating source, and that a rotary drive section constitutes a steam turbine that obtains a rotary drive force from steam generated by the steam generation section, and is substantially the same as the first embodiment in other configurations. In Fig. 6, the same parts as in the first embodiment shown in Figs. 1 to 5 are indicated by the same symbols and detailed description thereof is omitted.

As shown in Fig. 6, a synthetic fuel manufacturing system 1 according to this embodiment comprises a boiler 61 which is an example of the combustion section. The boiler 61 combusts the mixed gas G4 and the tail gas G3 to generate the highly concentrated gas G5, similarly to the aforementioned combustion section 25.

More specifically, the compressed mixed gas G4 is supplied from the first compressor 23 to the boiler 61 through the first compressor line 46. The compressed tail gas G3 is supplied from the second compressor 24 to the boiler 61 through the second compressor line 47. The boiler 61 mixes and combusts the mixed gas G4 and the tail gas G3 to generate the highly concentrated gas G5.

The boiler 61 includes a steam generation section 62 that generates steam G10 by means of the generated highly concentrated gas G5 as a heating source. More specifically, water may be supplied from a condenser, not shown, to the steam generation section 62 of the boiler 61, and the water and the highly concentrated gas G5 may exchange heat to generate steam G10. The generated steam G10 may be supplied to a steam turbine 63 described later through a third steam line 57 to be used for driving a turbine rotor, not shown, in rotation.

The boiler 61 is connected to the condenser 32 through the first highly concentrated gas line 48. The first highly concentrated gas line 48 supplies the highly concentrated gas G5 discharged from the boiler 61 to the condenser 32.

The steam generation section 62 of the boiler 61 is connected to the steam turbine 63 described later through a third steam line 57. The third steam line 57 supplies the steam G10 discharged from the steam generation section 62 to the steam turbine 63.

An extraction line 58 is connected to the third steam line 57. The extraction line 58 is connected to the reboiler 38 (see Fig. 3) of the carbon dioxide separation and recovery unit 34. The extraction line 58 extracts some of the steam G10 discharged from the steam generation section 62, and supplies it to the reboiler 38. The extraction line 58 may extract the steam G10 from the steam turbine 63, instead of extracting the steam G10 from the third steam line 57. The aforementioned second steam line 55 may be merged with the extraction line 58. The steam G9 of the second steam line 55 may be supplied, together with the steam G10 of the extraction line 58, to the carbon dioxide separation and recovery unit 34.

The rotary drive section 26 according to this embodiment may constitute the steam turbine 63. The steam turbine 63 serving as the rotary drive section 26 obtains a rotary drive force by the steam G10 obtained by means of the highly concentrated gas G5 generated by the combustion section 25. The steam turbine 63 is configured to drive the turbine rotor in rotation by the steam G10 discharged from the steam generation section 62. The steam G10 performs expansion work in the steam turbine 63, so that the turbine rotor is driven in rotation. The steam G10 having performed the expansion work is discharged from the steam turbine 63.

The electric power generator 27 is connected to the turbine rotor. When the turbine rotor is driven in rotation, the electric power generator 27 generates electric power to provide electric power P. In this embodiment, the electric power P generated by the electric power generator 27 is supplied to the carbon dioxide electrolysis unit 10 and the booster 20 through the electric power line 49. The carbon dioxide electrolysis unit 10 electrolyzes carbon dioxide gas by means of the generated electric power P. The booster 20 increases a pressure of the anode gas G2 by means of the generated electric power P.

The steam G10 discharged from the steam turbine 63 may be condensed by another condenser. In this case, condensed water generated by condensation may be supplied to the aforementioned steam generation section 62.

As shown in Fig. 6, the aforementioned carbon dioxide electrolysis unit 10 is supplied with carbon dioxide gas contained in the highly concentrated gas G5 generated by the boiler 61, and carbon dioxide gas contained in the exhaust gas G7 generated by the exhaust gas generation source 33. In this embodiment, the highly concentrated gas G5 generated by the boiler 61 is supplied to the condenser 32, and moisture is removed from the highly concentrated gas G5. The highly concentrated gas G5 is then supplied to the carbon dioxide separation and recovery unit 34. The carbon dioxide separation and recovery unit 34 recovers the carbon dioxide gas G8 from the highly concentrated gas G5 and the exhaust gas G7. The carbon dioxide gas G8 is supplied to the carbon dioxide electrolysis unit 10 and is electrolyzed.

According to this embodiment, the boiler 61 includes the steam generation section 62, and the rotary drive section 26 is formed by the steam turbine 63. Thus, the highly concentrated gas G5 is generated and the electric power P can be generated by means of the boiler 61, the steam turbine 63, and the electric power generator 27. The obtained generated electric power P can be used by the carbon dioxide electrolysis unit 10 and the booster 20, which can improve an energy recycling rate. In addition, also in this embodiment, similarly to the first embodiment shown in Figs. 1 to 5, carbon rich gas such as carbon dioxide gas can be prevented from being released into the atmosphere, which can improve a carbon recycling rate.

The aforementioned embodiments can improve a carbon recycling rate.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the sprit of the inventions. The accompanying claims and their equivalents are intended to cover such forms or modifications as would fail within the scope and spirit of the invention.

## Claims

1. A synthetic fuel manufacturing system comprising:
a carbon dioxide electrolysis unit that electrolyzes carbon dioxide gas and discharges cathode gas containing carbon monoxide gas and hydrogen gas;
a booster that increases a pressure of the cathode gas discharged from the carbon dioxide electrolysis unit;
a synthetic fuel generation unit that generates a synthetic fuel mainly containing hydrocarbons by means of the cathode gas having the increased pressure; and
a combustion section that combusts anode gas containing carbon dioxide gas and oxygen gas discharged from the carbon dioxide electrolysis unit, and tail gas containing hydrocarbon gas discharged from the synthetic fuel generation unit, to generate highly concentrated gas having an increased concentration of the carbon dioxide gas;
wherein the carbon dioxide electrolysis unit electrolyzes the carbon dioxide gas contained in the highly concentrated gas discharged from the combustion section.

2. The synthetic fuel manufacturing system according to claim 1, further comprising an electric power generator that generates electric power by a rotary drive force obtained by means of the highly concentrated gas generated by the combustion section,
wherein the carbon dioxide electrolysis unit electrolyzes the carbon dioxide gas by means of electric power generated by the electric power generator.

3. The synthetic fuel manufacturing system according to claim 1, further comprising an electric power generator that generates electric power by a rotary drive force obtained by means of the highly concentrated gas generated by the combustion section,
wherein the booster increases a pressure of the cathode gas by means of electric power generated by the electric power generator.

4. The synthetic fuel manufacturing system according to any one of the preceding claims 1 to 3, further comprising a carbon dioxide separation and recovery unit that separates and recovers the carbon dioxide gas from the highly concentrated gas discharged from the combustion section,
wherein the carbon dioxide electrolysis unit electrolyzes the carbon dioxide gas recovered by the carbon dioxide separation and recovery unit.

5. The synthetic fuel manufacturing system according to claim 4, further comprising a steam generator that generates steam by means of the highly concentrated gas generated by the combustion section as a heating source,
wherein the carbon dioxide separation and recovery unit separates and recovers the carbon dioxide gas from the highly concentrated gas by means of the steam generated by the steam generator.

6. The synthetic fuel manufacturing system according to any one of the preceding claims 1 to 3, further comprising a moisture removal unit that removes moisture from the highly concentrated gas discharged from the combustion section.

7. The synthetic fuel manufacturing system according to claim 2 or 3, further comprising a rotary drive section that obtains a rotary drive force by means of the highly concentrated gas generated by the combustion section,
wherein the combustion section and the rotary drive section constitute a gas turbine.

8. The synthetic fuel manufacturing system according to claim 2 or 3, further comprising a rotary drive section,
wherein the combustion section includes a steam generator that generates steam by means of the generated highly concentrated gas as a heating source, and
wherein the rotary drive section constitutes a steam turbine that obtains a rotary drive force by means of the steam generated by the steam generator.

9. The synthetic fuel manufacturing system according to claim 2 or 3, further comprising a rotary drive section that obtains a rotary drive force by means of the highly concentrated gas generated by the combustion section,
wherein the combustion section and the rotary drive section constitute a gas engine.

10. The synthetic fuel manufacturing system according to any one of the preceding claims 1 to 9, further comprising a carbon dioxide gas generation source,
wherein the carbon dioxide electrolysis unit electrolyzes the carbon dioxide gas contained in the highly concentrated gas discharged from the combustion section, and electrolyzes carbon dioxide gas generated by the carbon dioxide gas generation source.
